# EUROPEAN PATENT APPLICATION

(11) **EP 4 455 005 A1**
(43) Date of publication of application: **30.10.2024**
(21) Application number: 23185298.9
(22) Date of filing: 13.07.2023
(51) Int. Cl.: B64D 11/00, B64D 13/06

(54) **IMPROVED AIR VENTILATION SYSTEM FOR AN AIRCRAFT AND CORRESPONDING AIRCRAFT SECTION**

(30) Priority: 27.04.2023 IN 202311030333
(71) Applicant: Airbus Operations GmbH, 21129 Hamburg (DE)
(72) Inventor: Komarla, Sasank, Bangalore (IN)
(74) Representative: Schornack, Oliver

(57) **Abstract**

The present disclosure relates to a cabin air ventilation system (100) for a plurality of seat rows (20) in an aircraft. The air ventilation system comprises a main body (110) configured to be mounted to an underside of an overhead stowage compartment, the main body (110) defining an inner volume, and a plurality of air ventilation outlets (120) arranged in the main body (110), each of the ventilation outlets (120) being configured to generate an air flow from the inner volume of the main body (110) to one of the plurality of seat rows (20). At least some of the plurality of air ventilation outlets (120) are arranged to generate the respective air flow to different seat rows (20). Further disclosed are an aircraft section and an aircraft having such cabin air ventilation system (100).

## Description

The present disclosure generally relates to a cabin air ventilation system for a plurality of seat rows in an aircraft, an aircraft section comprising such cabin air ventilation system, and a corresponding aircraft. Particularly, the present disclosure relates to a cabin air ventilation system having a plurality of air ventilation outlets generating a respective air flow to different seat rows, and an aircraft section as well as an aircraft including such cabin air ventilation system.

A conventional aircraft is equipped with an air ventilation system that includes general air supply into an aircraft cabin as well as individual nozzles in a personal service unit. Such personal service units (PSU) are arranged in a pattern corresponding to the seat row pattern in the aircraft, so that one PSU is arranged above one seat row. A PSU can include a number of individual air nozzles for each seat of the seat row, wherein the air nozzles can be opened and closed and can be swivelled in accordance with the passenger's needs.

However, the general ventilation of the aircraft cabin can be restricted or unbalanced in certain parts of the aircraft, such as the rear of the aircraft. For instance, the fuselage of the aircraft narrows at its rear end and an installation space for the general ventilation components becomes limited. As a mere example, the general ventilation may be restricted, so that less fresh air is provided to the rear of the aircraft cabin and/or less air is removed from the rear of the aircraft cabin compared to regular parts of the aircraft cabin.

It is therefore an object of the present disclosure to provide an improved air ventilation system that provides a balanced supply of fresh air throughout the aircraft cabin.

This object is solved by the present invention as defined in the independent claims. Preferred embodiments are defined by the dependent claims.

According to a first aspect to better understand the present disclosure, a cabin air ventilation system for a plurality of seat rows in an aircraft comprises a main body and a plurality of air ventilation outlets arranged in the main body. The main body is configured to be mounted to an underside of an overhead stowage compartment and defines an inner volume. Due to the possibility of mounting the air ventilation system to the underside of the overhead stowage compartment, fresh air can be supplied to seat rows arranged below the overhead stowage compartment in an easy and efficient manner. Thus, a predefined and/or additional air supply can be provided to the aircraft cabin. This further allows a more balanced supply of fresh air throughout the aircraft cabin.

Furthermore, each of the ventilation outlets is configured to generate an air flow from the inner volume of the main body to one of the plurality of seat rows. Particularly, at least some of the plurality of air ventilation outlets are arranged to generate a air flows to different seat rows. Thus, the plurality of air ventilation outlets is configured and arranged, so that fresh air is flowing to at least two seat rows, i.e. different seat rows. Thus, a certain aircraft section comprising the different seat rows can be supplied with fresh air.

In an implementation variant, the main body can be coupled to an individual air supply duct configured to conduct fresh air along a longitudinal direction of the aircraft. For example, the individual air supply duct can run along the entire length of the aircraft cabin or at least significant portions thereof, to supply fresh air to the associated portion of the aircraft cabin. Such individual air supply duct can generally be used to supply fresh air to individual air nozzles.

The inner volume of the main body is in fluid communication with the individual air supply duct and receives a portion of the conducted fresh air. In other words, the individual air supply duct is used besides its usual purpose, i.e., distributing fresh air to fresh air supplying components, such as individual air nozzles, to provide fresh air to the inner volume of the main body.

This individual air supply duct can be a duct that is already present in the majority of aircrafts. As a mere example, most aircrafts are equipped with at least one fresh air duct, such as a duct supplying fresh air to personal service unit (PSUs). The cabin air ventilation system of the present disclosure can be simply connected to this already present individual air supply duct, so that no additional duct is required.

In a further implementation variant, the main body can be sized and configured to be mounted at least partially into a personal service channel arranged at the underside of the overhead stowage compartment. Thus, the cabin air ventilation system can be installed in a usual mounting space for PSUs, where an individual air supply duct or a branch thereof is usually present anyway. This facilitates supplying fresh air to the cabin air ventilation system. Moreover, the air ventilation system can be mounted in a manner that does not hinder a passenger reaching a seat of the seat row, for example, since the air ventilation system does not extend (far) from the underside of the overhead stowage compartment.

In yet another implementation variant, the plurality of air ventilation outlets can comprise one or more gaspers directed to a respective seat row. A gasper is like a nozzle, wherein the gasper is either fixed in its orientation (defining the direction of the airflow) or may only be slightly movable (to be marginally swivelled), while a main orientation faces the associated seat row. The gasper can provide a draft air flow, i.e. an airflow forced in a particular direction, to which the gasper points.

As a mere example, one or more of the gaspers are directed to a first seat row, while one or more further gaspers are directed to a second seat row arranged behind the first seat row (along a longitudinal direction of the aircraft). It is to be understood that the number of seat rows supplied with fresh air by corresponding/associated gaspers is not limited to two, but can include more seat rows, such as three or four or even five seat rows.

Alternatively or additionally, the plurality of air ventilation outlets can comprise one or more ventilation grills. Such ventilation grill can have a round, elliptical or rectangular circumference and comprises a plurality of lamella or fins configured to guide an airflow in a specific direction. A ventilation grill facilitates a uniform flow of fresh air. Particularly, the one or more ventilation grills provide a more uniform air flow compared to gaspers.

As with the gaspers, one or more ventilation grills will guide the air flow towards a first seat row, while another ventilation grill (or some other ventilation grills) direct an airflow towards a second seat row located behind the first seat row. It is to be understood that the number of seat rows supplied with fresh air by corresponding/associated grills is not limited to two, but can include more seat rows, such as three or four or even five seat rows.

Further alternatively or additionally, the plurality of air ventilation outlets can comprise one or more holes provided in the main body and facing a respective seat row. As a mere example, the material of the main body has a particular thickness. By providing the one or more holes in a particular direction through the material, i.e. at a specific angle relative to the thickness direction (e.g., 30° to 150° to the thickness direction), the direction of the airflow can be influenced. The one or more holes provide a simple and robust air ventilation outlet.

It is to be understood that the main body may have a shape that facilitates generating the air flows two different seat rows. Particularly, outer surfaces of the main body may be arranged to face in a direction towards the seat row, which is to be supplied with fresh air. Providing a respective gasper, grill and/or hole in this surfaces facilitates generating the airflow towards different seat rows.

In another implementation variant, the plurality of air ventilation outlets comprises at least one group of air ventilation outlets arranged along an outlet axis. In other words, the air ventilation outlets of the at least one group are arranged along a line. Thus, an airflow having a particular width or being directed along this line can be generated.

As a mere example, the outlet axis can run parallel to a seat row axis. Thus, the air ventilation outlets of this group are arranged along the outlet axis parallel to the seats of the seat row, so that the generated air flow covers or spreads over an area corresponding to at least a portion of the seats in the seat row.

In yet another implementation variant, the plurality of air ventilation outlets can comprise two or three groups of air ventilation outlets, each group consisting of a number of air ventilation outlets corresponding to a number of seats in the respective seat row. Thus, an airflow to each of the seats in the respective seat row can be generated. Each group, actually the air ventilation outlets of each group, generates an airflow covering or spreading over an area corresponding to at least a portion of the seats in the respective seat row.

In a further implementation variant, the main body and/or the plurality of air ventilation outlets are configured to provide a continuous air flow from the inner volume of the main body to the respective seat row. A continuous airflow means an uninterrupted airflow, as long as the inner volume of the main body is provided with a volume flow of fresh air. In other words, the continuous air flow is not blocked or switched off in the cabin air ventilation system, for example, by a passenger. Thus, when the individual air supply duct is operated, i.e. conducts a flow of fresh air, the cabin air ventilation system generates the air flow directed to the different seat rows.

According to a second aspect to better understand the present disclosure, an aircraft section comprises two or more seat rows, an overhead stowage compartment arranged above the two or more seat rows, and at least one cabin air ventilation system, according to the first aspect or one of its variants or examples. The at least one cabin air ventilation system is mounted to an underside of the overhead stowage compartment.

In an implementation variant, the two or more seat rows can be the last seat rows in the aircraft. For instance, the last seat rows in the aircraft can be installed in an area of the aircraft, where the fuselage narrows along the longitudinal direction of the aircraft (and towards the rear end of the aircraft).

In another implementation variant, the aircraft section can further comprise a personal service unit including individual air nozzles that can be operated (opened, closed and swivelled) by a passenger. The personal service unit is installed above one of the seat rows, particularly, one personal service unit is installed above each of the seat rows.

The individual air nozzles are fluidly connected to an individual air supply duct. The cabin air ventilation system is also fluidly connected to the individual air supply duct, so that both fresh air supply components (individual air nozzles and cabin air ventilation system) are supplied by the same fresh air supply duct. Since the cabin air ventilation system is not intended to be operated by a passenger, it rather forms part of a general air ventilation of the passenger cabin, although arranged at a different position (i.e., below the overhead stowage compartment) than the remainder of the general air ventilation.

According to a third aspect to better understand the present disclosure, an aircraft comprises at least one cabin air ventilation system, according to the first aspect or one of its variants or examples, and/or at least one aircraft section of the second aspect or one of its implementation variants or examples.

The present disclosure is not restricted to the aspects and variants in the described form and order. Specifically, the description of aspects and variants is not to be understood as a specific limiting grouping of features. It is to be understood that the present disclosure also covers combinations of the aspects and variants. Thus, each variant or optional feature can be combined with any other aspect, variant, optional feature or even combinations thereof.

In the following, the present disclosure will further be described with reference to exemplary implementations illustrated in the figures, in which:
- Figure 1: schematically illustrates a longitudinal section of an aircraft;
- Figure 2: schematically illustrates a cross-section of an aircraft;
- Figure 3: schematically illustrates different views of an exemplary cabin air ventilation system;
- Figure 4: schematically illustrates different views of another exemplary cabin air ventilation system; and
- Figure 5: schematically illustrates different views of a further exemplary cabin air ventilation system.

In the following description, for purposes of explanation and not limitation, specific details are set forth in order to provide a thorough understanding of the present disclosure. It will be apparent to one skilled in the art that the present disclosure may be practiced in other implementations that depart from these specific details.

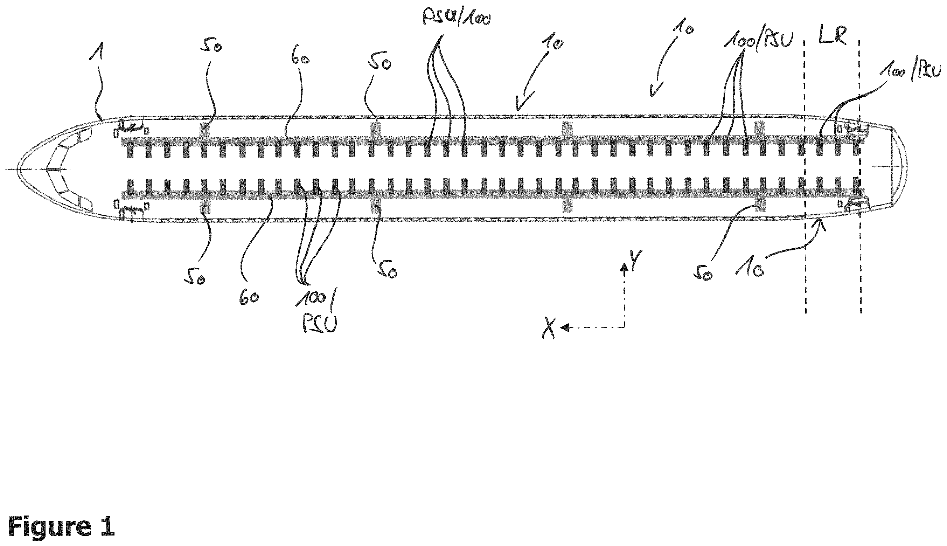

Figure 1 schematically illustrates a longitudinal section of an aircraft 1 (cut open in a horizontal plane over the entire length of the aircraft 1). The aircraft 1 comprises a plurality of aircraft sections 10, particularly of the passenger cabin. As a mere example, the aircraft sections 10 can correspond to flight class sections (business class, economy class, et cetera) and/or can correspond to sections in front of and behind of the wings and/or the emergency exits, or the like. All of these sections 10 is ventilated by a general ventilation system.

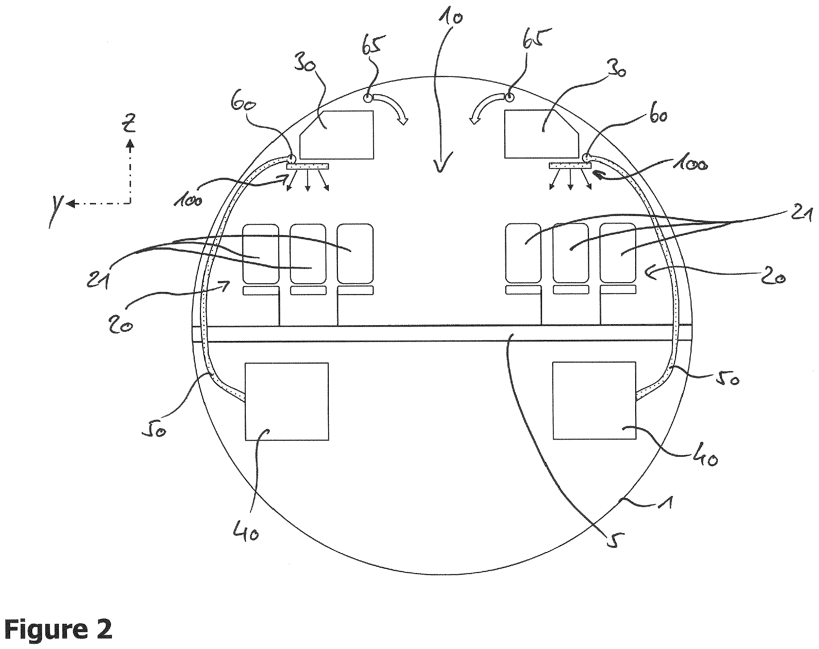

This general ventilation system usually has an air supplying device 40 (Figure 2) that conveys fresh or mixed air to the passenger cabin. For instance, in riser ducts 50 running from the bottom to the top of the aircraft 1 the fresh or mixed air is provided from the air supplying device 40 towards the passenger cabin. Along the longitudinal direction (X-axis) of the aircraft 1 there are one or more individual air supply ducts 60 that receive fresh or mixed air from the riser ducts 50 and distribute it along the longitudinal direction of the passenger cabin.

A plurality of personal service units (PSUs) are in fluid communication with the individual air supply duct 60. For instance, each PSU may be arranged above a seat row 20 (Figure 2) and may include one or more individual air nozzles (not illustrated), to provide fresh or mixed air to each seat row 20 or each seat 21 of the seat rows 20.

Figure 1 further indicates the PSUs with the reference numeral 100, since each PSU can include or consist of a cabin air ventilation system 100 as explained in more detail with respect to Figures 2 to 5.

As can be derived from Figure 1, certain sections 10 of the passenger cabin may not have an equal air distribution compared to the remaining sections 10. As a mere example, at the rear end of the aircraft 1, the fuselage of the aircraft 1 narrows. Usually, this area may further include a galley, lavatories or other monuments (not specifically illustrated). Thus, the installation space for the fresh or mixed air supplied to the passenger cabin may be influenced, so that the supply or removal of air to/from this section 10 may vary compared to the other sections 10.

For instance, the last rows (LR) of the seat rows 20 may form a section 10 that experiences less air ventilation in conventionally ventilated aircrafts. This may lead to a heat increase during flight, which the passengers may experience as uncomfortable.

Figure 2 schematically illustrates a cross-section of an aircraft 1, such as in the section 10 of the last rows LR. The aircraft 1 comprises a cabin floor 5, on which two seat rows 20 consisting of a plurality of passenger seats 21 are mounted. Above each seat row 20 is arranged an overhead stowage compartment 30. Adjacent, above, behind, etc. of the overhead stowage compartments 30 are installation spaces for any kinds of ducts, lines, pipes, etc., including riser ducts 50 and individual air supply ducts 60. In addition, another longitudinally arranged air supply duct 65 can, for example, be installed above the overhead stowage compartments 30 (along the X-axis) to provide a general air supply to the passenger cabin, here into an aisle between the seat rows 20.

The individual air supply duct 60 is usually in fluid communication with individual air nozzles (not illustrated) above the seat rows 20. For instance, a personal service unit, PSU (not illustrated), may have one nozzle (not illustrated) per seat 21 and is arranged above the seat row 20, so that each passenger can open, close, and swivel a respective nozzle for an individual fresh air supply.

As indicated above, the general air ventilation in the section 10 including the last rows, LR, may not be sufficient, so that an unbalanced air ventilation may be present in the passenger cabin.

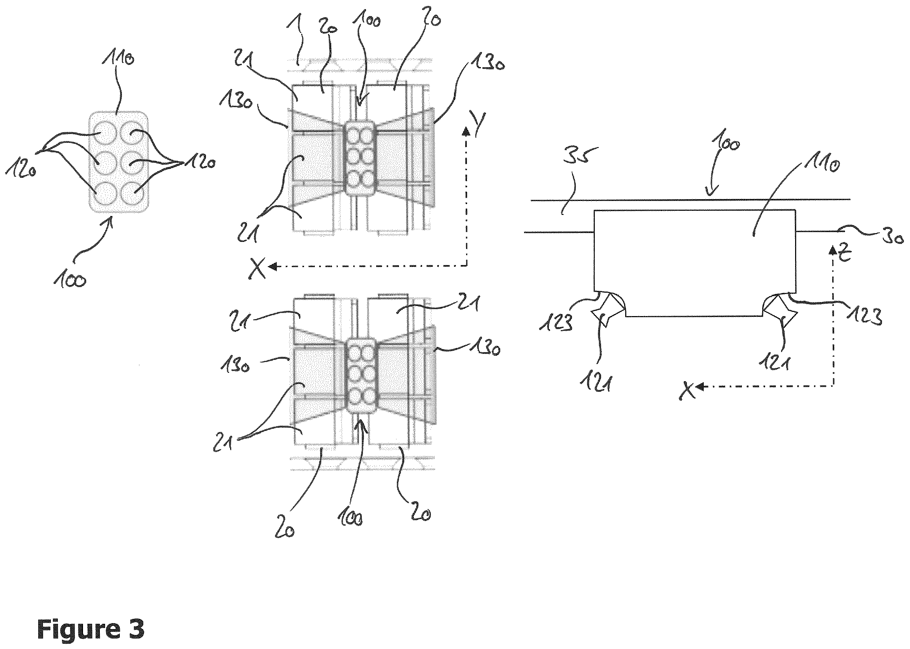

Thus, a cabin air ventilation system 100 can be installed on an underside (bottom) of an overhead stowage compartment 30. With additional reference to Figure 3, illustrating different views of an exemplary cabin air ventilation system 100, such cabin air ventilation system 100 can comprise a main body 110 configured to be mounted to the underside of the overhead stowage compartment 30. The main body 110 defines an inner volume that can be fluidly coupled to the individual air supply duct 60, so that fresh air conducted by the individual air supply duct 60 can be provided into the inner volume of the main body 110.

Figure 3 illustrates a plan view from bottom to top of the exemplary cabin air ventilation system 100 (left drawing in Figure 3), a schematic top view of the aircraft section 10 (middle drawing of Figure 3), and a cross-sectional view of the cabin air ventilation system 100 cut along the longitudinal direction of the aircraft 1 (right drawing of Figure 3).

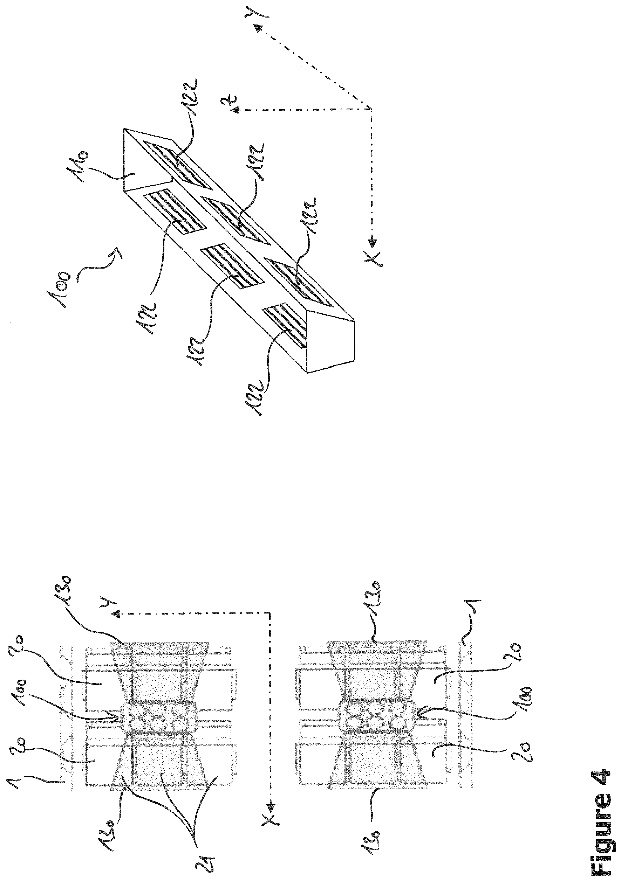

A plurality of air ventilation outlets 120 is arranged in the main body 110, each of which is configured to generate an air flow 130 from the inner volume of the main body 110 to one of the plurality of seat rows 20. The reference numeral 130 indicates the area, where the air flow 130 is provided. At least some of the plurality of air ventilation outlets 120 are arranged to generate the respective air flow 130 to different seat rows 20. The middle drawing of Figure 4 illustrates such air flow areas 130 above the seat rows 20. The air flow areas 130 are directed to different seat rows 20, for example, are directed in opposite directions.

The plurality of air ventilation outlets 120 can comprise one or more gaspers 121 as illustrated in Figure 3. Alternatively or additionally, the plurality of air ventilation outlets 120 can comprise one or more holes 123 provided in the main body 110 and facing a respective seat row 20. It is to be understood that the one or more holes 123 are illustrated only schematically, while their size may be much smaller than illustrated and there may be a larger number of holes 123.

The main body 110 and/or the plurality of air ventilation outlets 120 are configured to provide a continuous air flow 130 from the inner volume of the main body 110 to the respective seat row 20. In other words, and uncontrolled air flow 130 appears, when the individual air supply duct 60 is set under pressure, i.e. conducts fresh or mixed air. Since there is an uncontrolled air flow 130 (i.e., not controlled by a passenger individually), the cabin air ventilation system 100 extends or supplements the general air ventilation of the passenger cabin in the area 130 covered by the cabin air ventilation system 100.

Furthermore, the plurality of air ventilation outlets 120 can comprise two or more groups of air ventilation outlets 120. The exemplary cabin air ventilation system 100 of Figure 3 comprises two groups, each group consisting of three ventilation outlets 120. The two groups correspond to the two seat rows 20, to which a respective air flow 130 is provided by the cabin air ventilation system 100. The number of ventilation outlets 120 per group (here three ventilation outlets 120 per group) can correspond to a number of seats 21 in the respective seat row 20. This allows an equal distribution of air to each seat covered by cabin air ventilation system 100.

As can be derived from the right drawing of Figure 3, the main body 110 is sized and configured to be mounted at least partially into a personal service channel 35 arranged at the underside of the overhead stowage compartment 30. Such personal service channel 35 is commonly arranged at the underside of the overhead stowage compartment 30, for example, to receive one or more personal service units (not explicitly illustrated). Usually, the individual air supply duct 60 provides fresh or mixed air to the personal service channel 35, for example, by being arranged parallel or in the personal service channel 35 and having connecting plaques and/or branches for personal service units.

Thus, the more general air ventilation provided by the cabin air ventilation system 100 can be installed easily in the aircraft 1 without much reconfiguration or redesign of the passenger cabin. Furthermore, at least a portion of the main body 110 can be hidden in the personal service channel 35, so that the cabin air ventilation system 100 can be installed in a space-saving manner.

Figure 4 schematically illustrates different views of another exemplary cabin air ventilation system 100. The left drawing of Figure 4 illustrates a schematic top view of the aircraft section 10, and the right drawing of Figure 4 illustrates a perspective view of the other exemplary cabin air ventilation system 100.

The other exemplary cabin air ventilation system 100 is similar to the one illustrated in Figure 3. Thus, functionally similar or same components are not described for sake of brevity, and are provided with the same reference numerals as in Figure 3.

Specifically, this other exemplary cabin air ventilation system 100 of Figure 4 comprises a plurality of air ventilation outlets 120 that comprises one or more ventilation grills 122. Particularly, the ventilation grill(s) 122 are provided in the main body 110, such as in corresponding openings 123. The ventilation grills 122 are easy to install and can be produced in a cost-effective manner. The ventilation grills 122 can include fins or lamella guiding the air stream from the inner volume of the main body 110 towards the air flow areas 130 above and towards the seat rows 20.

It is to be understood that a combination of gaspers 121, ventilation grills 122 and holes 123 can be provided in a cabin air ventilation system 100. Depending on the size and location of the areas 130 to be provided with fresh air (relative to the cabin air ventilation system 100) gaspers 121 may become necessary (for an increased length of the air flow area 130), and/or ventilation grills 122 allow a large width (widespread) of the air flow areas 130, and/or holes 123 in the main body 110 allow a distinct volume flow to be provided in the air flow areas 130.

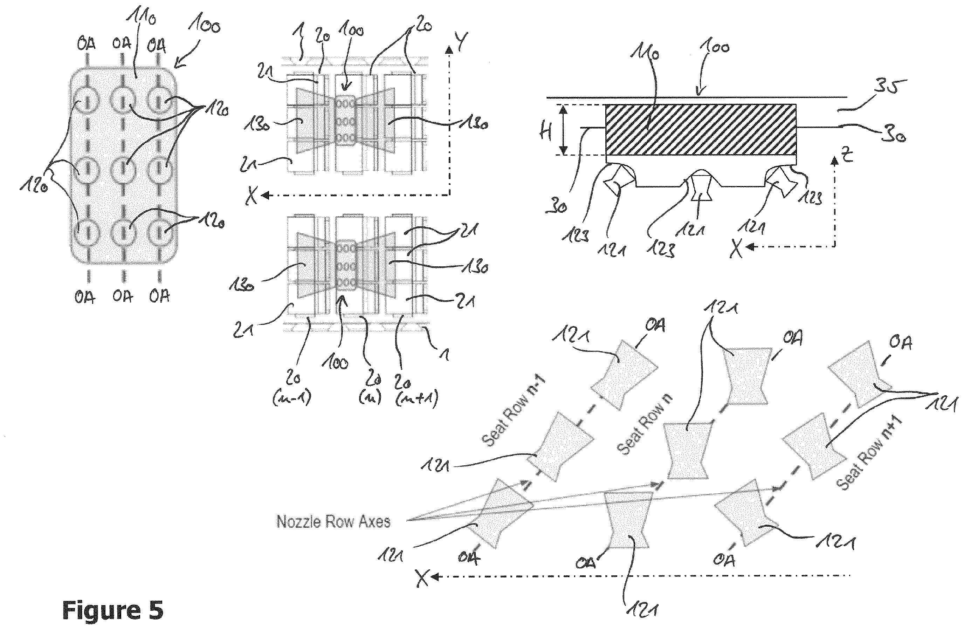

Figure 5 schematically illustrates different views of a further exemplary cabin air ventilation system 100, which is quite similar to the one illustrated in Figure 3. Thus, redundant features of same functionality are not explained again for sake of brevity, and are provided with the same reference numeral.

Particularly, the further exemplary cabin air ventilation system 100 comprises three groups of air ventilation outlets 120, in order to provide air flows 130 to three seat rows 20. Likewise, each group can include a certain number of air ventilation outlets 120, which corresponds to the number of seats 21 per seat row 20. Thus, Figure 5 illustrates nine air ventilation outlets 120 (3 x 3 grid of air ventilation outlets 120).

Although Figure 5 illustrates gaspers 121 to generate the respective airflow 130 in the direction of each seat 21 of the covered seat rows 20, it is to be understood that only holes 123 in the main body 110 and/or ventilation grills 122 (as in Figure 4) can be employed for one or more of the air ventilation outlets 120.

Figure 5 also illustrates that each group of air ventilation outlets 120 is arranged along an outlet axis, OA. This outlet axis OA can run parallel to a seat row axis, which usually corresponds to a cross-sectional direction (Y-axis) of the aircraft 1.

The upper right drawing of Figure 5 additionally illustrates that the main body 110 can be provided with different heights H. On the one hand, a flat main body 110 (of small height H) may be placed inside of the personal service channel 35, with only the air ventilation outlets 120 not being blocked. On the other hand, a main body 110 of large height H may provide an enhanced creation of swirl in the interior volume of the main body 110. This allows a more or less equal air flow distribution through each air ventilation outlet 120 and, hence, in all areas 130 and all seat rows 20.

As a mere example, the inner volume of the main body 110 will be connected to the individual air supply duct 60 by an associated hose or branch duct (not explicitly illustrated), which has an inlet on one side of the main body 110. Thus, air ventilation outlets 120 on the opposite side of the main body 110 would generate a larger volume flow of air than the other air ventilation outlets 120, if the inner volume of the main body 110 is too small. It is to be understood that further measures, such as plates, impingement bodies or the like may be installed in the main body 110 to achieve an equal distribution of volume flow through each air ventilation outlet 120.

Although the cabin air ventilation systems 100 of Figures 3 to 5 are described with respect to one section 10 of the passenger cabin, it is to be understood that the cabin air ventilation system 100 can be installed at one or more or all sections 10 of the passenger cabin. As a mere example, the cabin air ventilation systems 100 can replace other general air ventilation components, such as general air ventilation duct 65 and/or the individual air nozzles of a PSU. Thus, the entire passenger cabin could be ventilated solely by the cabin air ventilation systems 100 (as can be derived from Figure 1, components PSU/100). This achieves a weight reduction compared to conventional ventilation solutions, as the cabin air ventilation system 100 has a simple structure, e.g. does not require any movable parts.

It is believed that the advantages of the technique presented herein will be fully understood from the foregoing description, and it will be apparent that various changes may be made in the form, constructions and arrangement of the exemplary aspects thereof without departing from the scope of the disclosure or without sacrificing all of its advantageous effects. Because the technique presented herein can be varied in many ways, it will be recognized that the disclosure should be limited only by the scope of the claims that follow.

## Claims

1. A cabin air ventilation system (100) for a plurality of seat rows (20) in an aircraft (1), the air ventilation system comprising:
a main body (110) configured to be mounted to an underside of an overhead stowage compartment (30), the main body (110) defining an inner volume; and
a plurality of air ventilation outlets (120) arranged in the main body (110), each of the ventilation outlets (120) being configured to generate an air flow from the inner volume of the main body (110) to one of the plurality of seat rows (20),
wherein at least some of the plurality of air ventilation outlets (120) are arranged to generate the respective air flow to different seat rows (20).

2. The cabin air ventilation system (100) of claim 1, wherein the main body (110) is coupled to an individual air supply duct (60) configured to conduct fresh air along a longitudinal direction of the aircraft (1), wherein the inner volume of the main body (110) is in fluid communication with the individual air supply duct (60) and receives a portion of the conducted fresh air.

3. The cabin air ventilation system (100) of claim 1 or 2, wherein the main body (110) is sized and configured to be mounted at least partially into a personal service channel (35) arranged at the underside of the overhead stowage compartment (30).

4. The cabin air ventilation system (100) of one of claims 1 to 3, wherein the plurality of air ventilation outlets (120) comprises:
one or more gaspers (121) directed to a respective seat row (20), and/or
one or more ventilation grills (122), and/or
one or more holes (123) provided in the main body (110) and facing a respective seat row (20).

5. The cabin air ventilation system (100) of one of claims 1 to 4, wherein the plurality of air ventilation outlets (120) comprises at least one group of air ventilation outlets (120) arranged along an outlet axis (OA), wherein, preferably, the outlet axis (OA) runs parallel to a seat row axis (Y).

6. The cabin air ventilation system (100) of claim 5, wherein the plurality of air ventilation outlets (120) comprises two or three groups of air ventilation outlets (120), each group consisting of a number of air ventilation outlets (120) corresponding to a number of seats (21) in the respective seat row (20).

7. The cabin air ventilation system (100) of one of claims 1 to 6, wherein the main body (110) and/or the plurality of air ventilation outlets (120) are configured to provide a continuous air flow from the inner volume of the main body (110) to the respective seat row (20).

8. An aircraft section (10), comprising:
two or more seat rows (20);
an overhead stowage compartment (10) arranged above the two or more seat rows (20); and
at least one cabin air ventilation system (100) of one of claims 1 to 7 mounted to an underside of the overhead stowage compartment (10).

9. The aircraft section (10) of claim 8, wherein the two or more seat rows (20) are the last seat rows in the aircraft (1).

10. An aircraft (1) comprising at least one cabin air ventilation system (100) of one of claims 1 to 7, and/or at least one aircraft section (10) of claim 8 or 9.
